Europäisches Patentamt

European Patent Office

Office européen des brevets

(11) Veröffentlichungsnummer: **0 362 670**
**A2**

(12) # EUROPÄISCHE PATENTANMELDUNG

(21) Anmeldenummer: **89117727.1**

(22) Anmeldetag: **26.09.89**

(51) Int. Cl.⁵: **A01D 80/00**

(30) Priorität: **07.10.88 DE 8812616 U**

(43) Veröffentlichungstag der Anmeldung:
**11.04.90 Patentblatt 90/15**

(84) Benannte Vertragsstaaten:
**AT DE FR**

(71) Anmelder: **FELLA-WERKE GMBH**
**Fellastrasse 2**
**D-8501 Feucht bei Nürnberg(DE)**

(72) Erfinder: **Kohl, Bernhard**
**Lerchenweg 11**
**D-8501 Winkelhaid(DE)**
Erfinder: **Pürrer, Josef**
**Andreas-Schramm-Strasse 33**
**D-8501 Feucht(DE)**

(74) Vertreter: **Patentanwälte Czowalla . Matschkur**
**+ Partner**
**Dr.-Kurt-Schumacher-Strasse 23 Postfach**
**9109**
**D-8500 Nürnberg 11(DE)**

(54) **Heuwerbungsmaschine.**

(57) Die Erfindung bezieht sich auf eine Heuwerbungsmaschine, insbes. zum Frontanbau an einen Schlepper, mit einem an einem Dreipunktbock angeordneten Tragrahmen für den mit Stützrädern versehenen Maschinenrahmen sowie mit mindestens einem um eine vertikale Achse umlaufenden Kreisel bewegungsgesteuerter Recharme, wobei der Maschinenrahmen am freien Ende des Tragrahmens um eine quer zur Fahrrichtung verlaufende Achse pendelnd aufgehängt ist.

FIG. 1

EP 0 362 670 A2

# Heuwerbungsmaschine

Die Erfindung richtet sich auf eine Heuwerbungsmaschine zum Anbau an einem Schlepper, mit einem an einem Dreipunktbock angeordneten Tragrahmen für den mit Stützrädern versehenen Maschinenrahmen sowie mit mindestens einem um eine vertikale Achse umlaufenden Kreisel bewegungsgesteuerter Recharme.

Maschinen dieser Gattung dienen vorzugsweise zum Zusammenführen und Schwadlegen von breit liegendem Erntegut. Sie sind am Dreipunktsystem des Schleppers, rückseitig oder frontseitig, angebaut und durch das Dreipunktsystem aushebbar. Der Antrieb erfolgt von der Zapfwelle des Schleppers über eine zu einem Getriebe am Maschinenrahmen führende Gelenkwelle, die den/die Kreisel in umlaufende Bewegung versetzt. Zu ihrer Bewegungssteuerung laufen die Recharme mit einem an ihrem inneren Ende angeordneten Kurbelarm in einer Steuerkurve, so daß ihre Rechzinken auf einem Teil der Umlaufbahn der Recharme zum Boden gerichtet sind und das Erntegut nach der Seite zusammenschieben, während die Zinken auf einem anderen Teil der Umlaufbahn der Recharme nach oben schwenken und damit das zusammengeführte Erntegut seitliche ablegen. Um eine gute Bodenführung und damit einwandfreie Arbeit der Recharme zu erzielen, stützt sich der Maschinenrahmen über mindestens zwei Laufräder gegenüber dem Boden ab. Ursprünglich hat man derartige Schwadmaschinen am Heck des Schleppers angebaut und ziehend bewegt. Der notwendigen Bodenhaftung der Rechkreisel diente die Anordnung der beiden Laufräder nahe der Zinken und zwar geringfügig vor dem Schwerpunkt der Maschine. Dadurch stabilisierte sich die Maschinenlage gegenüber dem Schlepper zu Gunsten einer sauberen Bodenarbeit. Beim ziehenden Betrieb wird allerdings das breit liegende Erntegut vom Schlepper überfahren, was unerwünscht ist. Deshalb ist man zunehmend zum Frontanbau derartiger Heuwerbungsmaschinen übergegangen und bewegt diese nun schiebend über den Boden. Dabei führen die Kreiselarme die Recharbeit in dem in Fahrtrichtung vordersten Teil ihrer Umlaufbahn und damit in einem vergleichsweise großen Abstand zu den den Maschinenrahmen abstützenden Laufrädern. Hierdurch wird allerdings die Bodenhaftung der Kreisel nachteilig beeinflusst, und eine unsaubere Arbeit ist die Folge. Deshalb hat man die Stützräder samt ihrer Achse um 180° um die Drehachse des Kreisels verschwenkt und damit zwar den Abstand zu den arbeitenden Zinken der Recharme vermindert, zugleich aber die Schwerpunktlage der Maschine ungünstig beeinflußt. Eine solche Anordnung verursacht Nickbewegungen und führt zu einer ausgesprochen unstabilen Lage der Maschine mit der Folge einer unsauberen Recharbeit. Dieser Erscheinung begegnete man durch ein unter dem Dreipunktbock angeordnetes weiteres Stützrad und den Ersatz des starren Oberlenkers des Dreipunktgestänges durch eine Kette. In diesem Fall läuft die Heuwerbungsmaschine praktisch auf drei Rädern. Allerdings bereitet die Plazierung dieses zusätzlichen Stützrades wegen der dort verlaufenden Gelenkwelle des Maschinenantriebs erhebliche konstruktive Schwierigkeiten. Andererseits wird der Ersatz des Oberlenkers durch eine Kette durch einen nicht unbeachtlichen Verlust an Hubhöhe erkauft. Deshalb konnte auch diese Lösung im Ergebnis nicht befriedigen. Zwar wird ein ruhiger Lauf der Maschine erzielt, doch läuft ein solches Stützrad über das ausgebreitete Erntegut; es neigt zum Wickeln und führt deshalb zu Störungen während des Betriebs. Schließlich ist aber eine solche Konstruktion aufwendig, sowie schwer und kostspielig.

Vorteilhaft erwies sich statt dessen die Anordnung dieses zusätzlichen Stützrades innerhalb des Zinkenkreises, was der Heuwerbungsmaschine zu einer Bodenführung etwa nach dem Prinzip eines zweiachsigen Fahrzeugs verhalf. Es konnte hierzu ein starrer Dreipunktbock verwendet werden, während der Oberlenker des Dreipunktgestänges wiederum durch eine Kette ersetzt worden ist. Obwohl bei dieser Anordnung das weitere Stützrad nicht das Erntegut überfährt oder zu einer konstruktiven Behinderung führt, ergab diese Anordnung insbes. bei welligen Bodenverhältnissen eine instabile Lage der Maschine, der auch durch Entlastungsfedern nicht abzuhelfen war. Eine größtmögliche Stabilität der Maschine in Arbeitsstellung und eine besonders ausgeprägte Bodenhaftung mit einer dadurch bedingten einwandfreien Arbeit der Heuwerbungsmaschine haben sich nach wie vor als wichtigste Forderungen herausgestellt. Um diese Faktoren zu realisieren, wurde der Maschinenrahmen um eine waagrechte Achse am Dreipunktbock schwenkbar gelagert, und zwischen dem Dreipunktbock und dem Maschinenrahmen eine diesen gegenüber dem Dreipunktbock abstützende Federanordnung vorgesehen. Diese Maschine läuft einwandfrei auf ihren drei Stützrädern, und die gelenkige Verbindung zwischen Maschinenrahmen und Dreipunktbock hat eine stabile Arbeitslage insbes. bei dem heute bevorzugten Frontanbau zur Folge. Der Nachteil dieser Lösung des gestellten Problems besteht darin, daß zur Erzielung einer ausreichenden Bodenanpassung der Dreipunktbock nicht starr gestellt werden darf. Damit wirkt aber sein Gewicht auf die Maschine. Um dieser Belastung entgegenzuwirken, wurden Entlastungsfedern vorgesehen, die an den Anschlußstellen der Unterlenker angreifen und andererseits am Anschlußpunkt des Oberlenkers des Schleppers befestigt sind. Dieses System verlangt eine sehr genaue Einstellung der Federn, um den Dreipunktbock und das Gewicht der Unterlenker gewissermaßen schwerelos erscheinen zu lassen. Bedingt durch die unterschiedlichen Ausführungsformen der verschiedenen Dreipunktanbausysteme der einzelnen Schleppertypen erweist sich die Einstellung dieser Federn als eine schwierige Aufgabe für die Bedienungsperson, mit der diese vielfach überfordert ist. Außerdem müssen beim Abbau dieser Heuwerbungsmaschine die Entlastungsfedern ebenfalls abgebaut und beim späteren Anbau der Maschine wieder neu angeschlossen werden. Der hierdurch bedingte Zeitverlust wird bei der Heuernte als außerordentlich störend empfunden.

Um dieser Problematik bei einer Maschine der eingangs bezeichneten Art abzuhelfen und ein Höchstmaß an Bodenanpassung bei zugleich größter Stabilität der Maschine in Arbeitsstellung zu erreichen, sieht die Erfindung vor, daß der Maschinenrahmen am freien Ende des Tragrahmens um eine quer zur Fahrrichtung verlaufende Achse pendelnd aufgehängt ist. Der Grundgedanke dieser Lösung besteht darin, die für die Bodenanpassung der Maschine erforderliche Beweglichkeit nicht dem Dreipunktbock anzuvertrauen, sondern vielmehr den Anschluß der Verbindungselemente zwischen Dreipunktbock und Maschinenrahmen an der Verbindung zu diesem beweglich zu gestalten. Durch diese Maßnahme wird das Gewicht des Dreipunktbockes und der Unterlenker zum Teil von der Dreipunkthydraulik getragen. Zum anderen Teil belastet das Gewicht über den Anlenkpunkt des Maschinenrahmens am Tragrahmen etwa den Schwerpunkt der Maschine. Eine ungleichmäßige Belastung wird damit ausgeschlossen, was wiederum Entlastungsfedern entbehrlich macht. Als besonders vorteilhaft hat es sich erwiesen, eine solche Heuwerbungsmaschine mit drei Stützrädern auszustatten, die auf zwei Achsen angeordnet sind und damit ein Verhalten wie ein zweiachsiger Anhänger zeigen. Durch die übliche volle Schwenkbarkeit der Stützräder kann eine solche Heuwerbungsmaschine den Gelenkbewegungen des Schleppers auch beim Frontanbau problemlos folgen. Durch die Pendelbewegung der Aufhängung des Maschinenrahmens am Tragrahmen ergibt sich eine besonders überraschende hohe Anpassungsfähigkeit an Bodenunebenheiten.

Es liegt im Rahmen der Erfindung, daß die Aufhängeachse für den Maschinenrahmen annähernd im Schwerpunkt des Maschinenrahmens angeordnet ist. Diese Maßnahme hat sich als besonders vorteilhaft zur Lösung der gestellten Aufgabe erwiesen. Rein konstruktiv sieht eine besonders zweckmäßige Ausführungsform der Erfindung so aus, daß der Tragrahmen an seinem freien Ende eine gabelförmige Lagerung für zwei am Maschinenrahmen angeordnete seitliche Schwenkzapfen aufweist. Eine solche Schwenkzapfenanordnung vermag den auftretenden Bewegungen besonders gut Rechnung zu tragen.

Eine weitere Ausgestaltung erfährt die Erfindung in der Weise, daß der Tragrahmen um eine vertikale Achse schwenkbar am Dreipunktbock gelagert ist. Dadurch läßt sich die Heuwerbungsmaschine unabhängig vom Schlepperanbau wie eine angehängte Maschine führen. Diese Ausführungsform eignet sich vor allem für den Heckanbau. Alternativ hierzu läßt die Erfindung aber eine Konstruktion zu, bei der der Tragrahmen um eine quer verlaufende Achse schwenkbar am Dreipunktbock gelagert und die Schwenkbewegung nach unten begrenzt ist. Auf diese Weise kann der Verlust an Aushubhöhe der Maschine begrenzt werden.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:

Fig. 1 die erfindungsgemäße Heuwerbungsmaschine in Seitenansicht sowie

Fig. 2 in Draufsicht;

Fig. 3 eine abgewandelte Ausführungsform des Tragrahmens in Seitenansicht und

Fig. 4 in Draufsicht;

Fig. 5 eine alternative Ausführungsform wiederum in Seitenansicht und

Fig. 6 in Draufsicht.

Vorzugsweise an der Frontseite des in der Zeichnung aus Gründen der Vereinfachung nicht wiedergegebenen Schleppers ist an dem Oberlenker 1 und den beiden Unterlenkern 2 der Dreipunktbock 3 angebracht, der dem Anbau der Heuwerbungsmaschine dient. Der Dreipunktbock 3 trägt bei dieser Ausführungsform einen Tragrahmen 4, bestehend aus zwei unteren Armen 5 und einer oberen Strebe 6. Diese greift an einem die beiden unteren Arme 5 verbindenden Distanzstück 7 an. Am freien Ende der nach Art einer Gabel auslaufenden unteren Arme 5 des Tragrahmens 4 ist je eine Buchse 8 angebracht, die einen Schwenkzapfen 9 lagert. Diese beiden Schwenkzapfen 9 sind in diametral gegenüberliegender Anordnung an einem Getriebegehäuse 10 angebracht. Auf einer von diesem nach unten gerichteten Achse 11 ist eine kegelförmige Trommel 12 gelagert, an deren Außenumfang für jeden Recharm 13 ein Lagerrohr 14 befestigt ist. Diese Lagerrohre 14 laufen mit der Trommel 12 um. Die Recharme 13 tragen an ihrem äußeren Ende die Zinken 15, und sie sind an ihrem inneren Ende mit einem Kurbelarm 16 versehen, der mit einer Führungsrolle in einer Steuerkurve 17 läuft. Auf diese Weise nehmen die Rechzinken 15 bei ihrem Umlauf um die Achse 11 eine veränderliche Stellung ein. Auf einem Teil ihrer Umlaufbahn ragen sie in der Stellung 18 nach unten, und sie schieben hierbei das auf dem Boden 19 liegende Erntegut zusammen. Auf einem anderen Teil ihrer Umlaufbahn schwenken sie in ihren Lagerrohren 14 nach oben in die Stellung 20, so daß das zusammengeführte Erntegut seitlich im Schwad abgelegt werden kann. Die Trommel 12 erfährt ihren Antrieb von der in dem Rahmenrohr 21 geführten Antriebswelle, die in im einzelnen nicht wiedergegebener Weise über eine Gelenkwelle mit der Zapfwelle des Schleppers gekoppelt ist.

Am unteren Ende der Achse 11 ist ein Fahrgestell 22 gelagert, welches bei der in der Zeichnung wiedergegebenen Ausführungsform drei Stützräder 23 aufweist. Diese Stützräder 23 sind um eine vertikale Achse 24 um etwa 360° schwenkbar gelagert. Die Zeichnung läßt erkennen, daß die Stützräder 23 innerhalb des von den Rechzinken 15 beschriebenen Kreises untergebracht sind. Mit Hilfe einer Kurbel 25 läßt sich vom Schleppersitz aus das Gestänge 37 zur Einstellung der Arbeitshöhe der dargestellten Heuwerbungsmaschine betätigen.

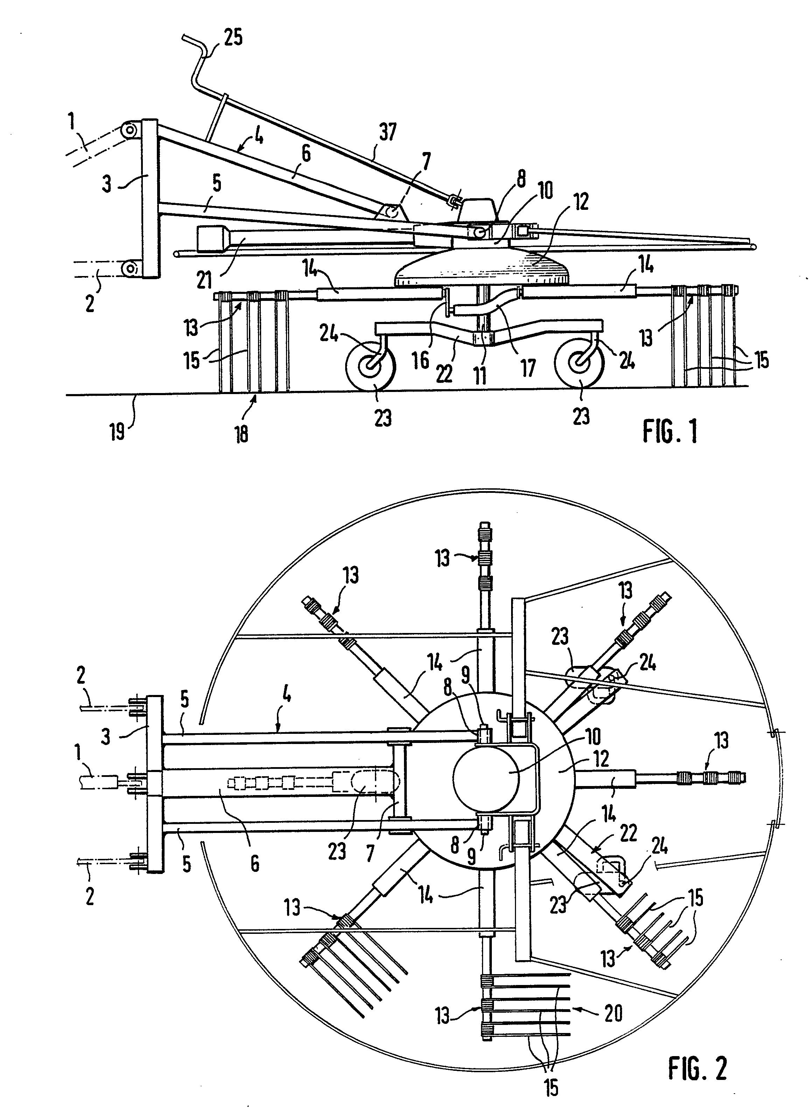

In der in Fig. 1 und 2 wiedergegebenen Arbeitsstellung der Maschine befindet sich der Maschinenrahmen durch die Lagerung der Schwenkzapfen 9 in den Buchsen 8 der unteren Arme 5 in einer sogenannten "Schwimmstellung", in der die unteren Lenker 2 des Dreipunktgestänges nach unten oder oben ausweichen können. In dieser Stellung ruht ein Teil des Gewichts des Dreipunktbocks 3 und des Tragrahmens 4 auf dem Maschinenrahmen. Diese Belastung greift über die Schwenkzapfen 9 etwa im Schwerpunkt der Maschine an, so daß diese zusätzlich auf den Boden 19 gedrückt wird, was zu einem ruhigen Lauf des Kreisels der Recharme 13 selbst bei unebenem Boden führt. Die Schwenkzapfenlagerung gewährleistet darüber hinaus eine einwandfreie Bodenhaftung der Stützräder 23, was wiederum Voraussetzung für eine saubere Recharbeit ist. Zum Ausheben der Maschine in die Transportstellung wird der Dreipunktbock 3 und damit der Tragrahmen 4 von der Schlepperhydraulik angehoben. Die Maschine hängt dann an den in den Buchsen 8 geführten Schwenkzapfen 9. Die Hubhöhe der Schlepperhydraulik wirkt sich hierbei voll auf die Hubhöhe der Maschine aus.

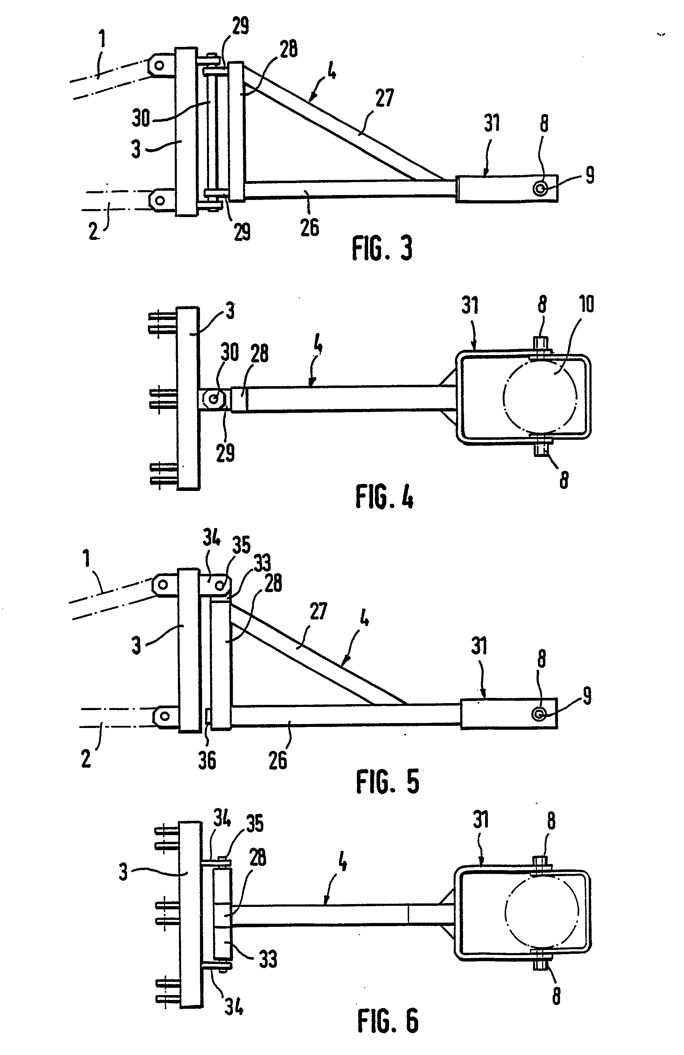

Die Fig. 3 + 4 zeigen einen Tragarm 4, bestehend aus einem unteren Arm 26 und einem oberen Arm 27, die mittels einer Strebe 28 miteinander verbunden sind. An dieser sind in Abstand übereinander zwei Ösen 29 angeordnet, die zur Lagerung des Tragarms 4 an einer mit dem Dreipunktbock verbundenen vertikalen Schwenkachse 30 dienen. Am hinteren Ende weist dieser Tragarm 4 eine Gabel 31 auf, die wiederum Buchsen 8 zur Lagerung der maschinenseitigen Schwenkzapfen aufweist. Diese Ausführungsform kommt für den Anhängeanbau am Heck des Schleppers in Betracht. In diesem Fall sind die Stützräder 23 der Maschine im allgemeinen über eine nicht dargestellte Arretierungseinrichtung starr gestellt. Der Tragrahmen 4 kann zum Ausheben der Maschine in die Transportstellung durch eine nicht dargestellte Arretierungseinrichtung gegenüber der Schwenkachse 30 festgestellt werden, um ein seitliches Pendeln des Tragrahmens 4 mit der Maschine auszuschließen.

Bei der in den Fig. 5 und 6 wiedergegebenen Ausführungsformen ist der Tragrahmen 4 am oberen Ende der Strebe 28 mit einem Querhaupt 33 versehen, dessen beide Enden je in einer am Dreipunktbock 3 angebrachten Lageröse 34 gelagert sind. Auf diese Weise kann der Tragarm 4 um eine horizontale Achse 35 schwenken. Hierbei können die Unterlenker 2 des Dreipunktgestänges in einer vorbestimmten Höhe festgelegt werden, und die Höhenunterschiede, die sich bei dem Lauf der Maschine über Bodenwellen ergeben, können durch eine Schwenkbewegung des Tragarms 4 um die Querachse 35 ausgeglichen werden. Beim Ausheben der Maschine in die Transportstellung gelangt der Tragarm 4 mittels eines Puffers 36 am Dreipunktbock 3 zum Anschlag.

## Ansprüche

1. Heuwerbungsmaschine, insbes. zum Frontanbau an einen Schlepper, mit einem an einem Dreipunktbock angeordneten Tragrahmen für den mit Stützrädern versehenen Maschinenrahmen sowie mit mindestens einem um eine vertikale Achse umlaufenden Kreisel bewegungsgesteuerter Recharme, dadurch gekennzeichnet, daß der Maschinenrahmen am freien Ende des Tragrahmens (4) um eine quer zur Fahrrichtung verlaufende Achse pendelnd aufgehängt ist.

2. Heuwerbungsmaschine nach Anspruch 1, dadurch gekennzeichnet, daß die Aufhängeachse annähernd im Schwerpunkt des Maschinenrahmens angeordnet ist.

3. Heuwerbungsmaschine nach Anspruch 1 oder 2, dadurch gekennzeichnet, daß der Tragrahmen (4) an seinem freien Ende eine gabelförmige Lagerung (31) für zwei am Maschinenrahmen angeordnete seitliche Schwenkzapfen (9) aufweist.

4. Heuwerbungsmaschine nach mindestens einem der Ansprüche 1 bis 3, dadurch gekennzeichnet, daß der Tragrahmen (4) um eine vertikale Achse (30) schwenkbar am Dreipunktbock (3) gelagert ist.

5. Heuwerbungsmaschine nach mindestens einem der Ansprüche 1 bis 3, dadurch gekennzeichnet, daß der Tragrahmen (4) um eine quer verlaufende Achse schwenkbar am Dreipunktbock (3) gelagert und die Schwenkbewegung nach unten begrenzt ist.

FIG. 1

FIG. 2

FIG. 3

FIG. 4

FIG. 5

FIG. 6